Europäisches Patentamt

European Patent Office

Office européen des brevets

(19)

(11) Publication number: **0 093 451 B1**

(12) **EUROPEAN PATENT SPECIFICATION**

(45) Date of publication of patent specification: **29.01.92**  (51) Int. Cl.5: **B60C 9/18**, B60C 9/22

(21) Application number: **83104328.6**

(22) Date of filing: **02.05.83**

(54) Improvements to the breaker structure of motor-vehicle tyres.

(30) Priority: **30.04.82 IT 2101382**

(43) Date of publication of application:
**09.11.83 Bulletin 83/45**

(45) Publication of the grant of the patent:
**29.01.92 Bulletin 92/05**

(84) Designated Contracting States:
**AT BE DE FR GB LU NL SE**

(56) References cited:
FR-A- 2 343 617     FR-A- 2 405 147
GB-A- 1 604 393     GB-A- 2 045 701
GB-A- 2 066 171     GB-A- 2 077 671

**PATENTS ABSTRACTS OF JAPAN, vol. 7, no.
128 (M-220)[1273], 3rd June 1983**

(73) Proprietor: **PIRELLI COORDINAMENTO
PNEUMATICI Società per Azioni
Piazzale Cadorna, 5
I-20123 Milan(IT)**

(72) Inventor: **Bandel, Paolo
Via Spiga, 19
Milano(IT)**
Inventor: **Vismara, Ivano
Via Volturno, 8
Rho (Milano)(IT)**

(74) Representative: **Dr. Elisabeth Jung Dr. Jürgen
Schirdewahn Dipl.-Ing. Claus Gernhardt
P.O. Box 40 14 68 Clemensstrasse 30
W-8000 München 40(DE)**

Rank Xerox (UK) Business Services

## Description

The present invention concerns motor vehicle tyres having a radial carcass, i.e. tyres wherein the reinforcing cords of the carcass plies are disposed substantially at 90° with respect to the circumferential direction of the tyre.

More specifically, the present invention concerns the annular reinforcing structure, usually known as the breaker disposed at the crown of said tyres, and one aim of the present invention is to obtain tyres having a low absorption of horse power with maintaining excellent road behaviour of the tyre.

The above said breaker is a very important element in tyres, even essential in tyres having a radial carcass, since it blocks the circumferential expansion of the carcass under the effects of the inflation pressure, with maintaining said carcass within the desired dimensional limits and conditions concerning mainly the wear of the tyre, its fatigue endurance and its road behaviour.

At the first appearance of radial tyres, certain designers thought that the breaker most suitable for the said purpose was a breaker constituted by simple wrapping of textile or metallic cords disposed longitudinally, i.e. at O° with respect to the circumferential direction of the tyre, and rubberized with an appropriate elastomeric material, because of its simplicity of manufacture and good results.

Such a breaker proves definitely to be able to limit the carcass expansion by adequately supporting the inflation pressure and the centrifugal forces acting on the tyre during exercise but it is absolutely insufficient with regard to the characteristics of the road behaviour of the tyre.

In fact, said breaker possesses low transversal rigidity owing to the low rigidity of the elastomeric rubber material, for which reason it is unable to support the forces that are acting upon it, whenever the tyre is cornering, or, when it is subjected to the action of transversal forces that are directed along the tyre axis. The consequent result is a tyre devoid of directional and lateral stability and hence, a non acceptable tyre.

The disposition at O° was therefore abandoned in favour of more complex breaker structures comprising essentially a plurality of radially superimposed layers of cords disposed inclined with respect to the circemferential direction and crossing the cords of the adjacent layers.

These structures present an excellent driving performance but, owing to their thickness, also result in a non negligible absorption of horse power. However, the latter aspect has never been noted in the past as being an element to be taken into consideration.

Recently instead, the problem of the absorption of horse power, has acquired much more importance in view of the improved qualitative performance required of tyres, and in view of the increasing cost of fuel.

All the structural parts constituting the tyre have thus been reexamined and redesigned for the purpose of obtaining tyres having improved smooth running. In this field it now became important and urgent to also reduce the amount of horse power absorbed by the breaker which by now results as no longer being negligible with regard to the entire amount of horse power absorbed by the tyre during exercise, and which is an important amount when compared to the amounts absorbed by the other structural parts of the tyre.

Therefore the breakers which are very thin and hence have a low number of cord layers, have once again been taken into consideration, in particular breakers having only one cord layer, the cords of which are disposed according to the circumferential direction of the tyre, in combination with layers of materials having a high modulus of elasticity.

Nevertheless, although there was some success in realizing injected tyres, entirely formed out of polyurethanic material and having breakers at O°, nobody has yet succeeded in solving the problem of having a breaker for tyres with a textile or metallic carcass obtained by the traditional processes, which breaker is constituted by a single layer of circumferentially disposed cords, because the various materials used for rubberizing the cords were always unsuited for the said purpose either owing to an insufficient rigidity or to degrading of their characteristics during life time of the tyre, or owing to difficulties in assembling it with other parts constituting the tyre, and no criteria are known for examining and for selecting an appropriate material from those that are not utilizable.

It has now been found a solution for the above said problem, so much so that the aim of the present invention is a tyre for motor vehicles, provided with a breaker structure that adopts for the rubberizing of the cords high modulus materials having particular physical characteristics which constitute moreover the guiding parameters to be considered for deciding the utilizability of a given material in the previously defined field of tyre technology.

Hence, what constitutes the object of the present invention, is a tyre for vehicle wheels, comprising a radial carcass, a tread band disposed in the crown of said carcass and an annular reinforcing structure (breaker) that is circumferentially inextensible, interposed between said carcass and said tread band and having substantially the same width as said band, said annular reinforcing structure comprising a single layer of high modulus elastomeric material reinforced with a strip of cords of a tension resistant material, disposed parallel to each other and oriented according to an angle comprised between O˚ and 10˚ with respect to the circumferential direction of the tyre, said elastomeric material having a dynamic modulus for shearing stresses under a cyclic deformation of 4% at a frequency of 50Hz, after a conditioning of at least 100 cycles and at a temperature of 60˚C, comprised within 25 and 35 Megapascals and an index of loss by hysteresis tan δ measured under the same conditions of said modulus, of not over O,10, characterized by the fact that said elastomeric material is selected to comprise the further characteristic of variation of the value of its dynamic modulus, after a period of endurance of 500,000 cycles under a deformation of 4% at a temperature of 60˚C, comprised within 20% of the initial value, measured under the same conditions.

Preferably, the value of said modulus is maintained within a range of 20% more or less of the value at 60˚C even for a variation of the testing temperature from 60˚C to 20˚C.

For the high modulus materials, there are quite conveniently utilizable thermoplastic, elastomeric materials (polyurethane, sequenced copolymers of the polyetherester type, polyamides, polyetheresteramides) such as pure elastomeric thermo setting materials (elastomeric based materials, polyurethanes), whereas, as far as the cords of the above said strip are concerned, there are diverse materials which are quite appropriately utilizable such as steel, aromatic polyamides, fibreglass, and the like, with choosing the density of the cords in the strip in relation to the material adopted.

The present invention will be better understood by the following description and with reference to the attached FIGURES which show a non limiting example.

FIG. 1 - shows a piece of a breaker according to the invention;
FIG. 2 - shows a cross section of a tyre provided with a breaker of FIG. 1;
FIG. 3 - shows a cross section of a specimen sheet used for determining the characteristics of the high modulus elastomeric material utilized in the above said breaker.

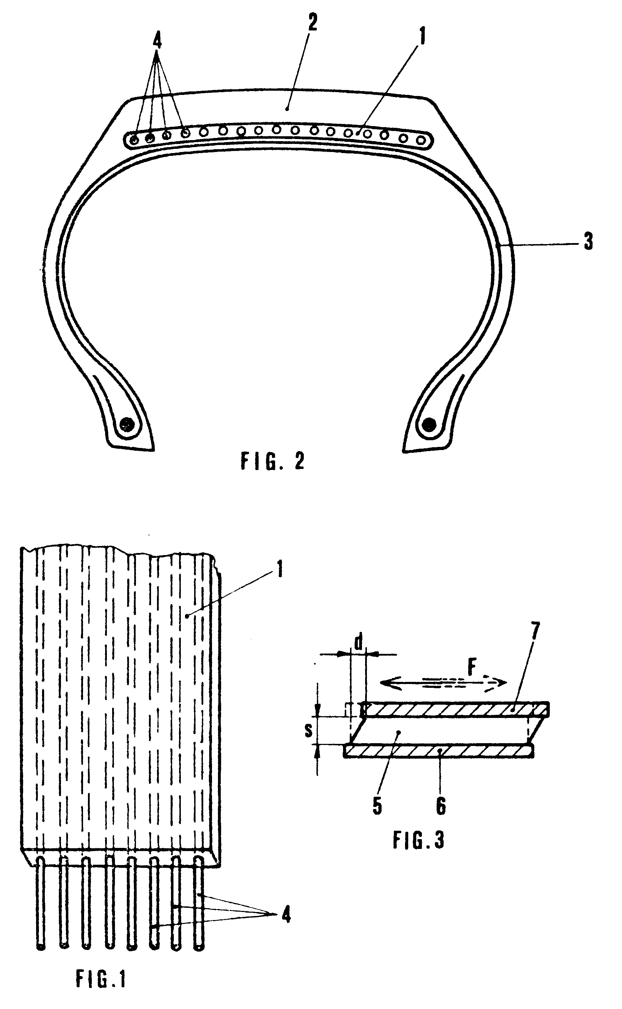

The annular reinforcing structure (breaker or belt) of FIG. 1, comprises a layer 1 of high modulus elastomeric material, appropriately based on polyurethane, that is substantially as wide as the tread band 2 of the tyre (FIG. 2), disposed in the crown of a carcass 3.

The invention is particularly advantageous when the carcass is of the radial type, i.e. when it comprises one or several plies of rubberized fabric (textile or metallic), with the reinforcing cords oriented at 90˚ with respect to the circumferential direction of the tyre, i.e. lying in substantially radial planes.

Inside the said layer 1, there is embedded a circumferential reinforcement constituted by a cord strip, the cords 4 of which are disposed according to the longitudinal direction of the tyre, i.e. oriented according to an angle comprised between O˚ and 10˚ with respect to the equatorial plane of the tyre, and realized with a material that is resistant at least to tensions, for thus guaranteeing the circumferential inextensibility of the above said breaker structure.

It is likewise intended that the term 'cord strip' also comprises a realization constituted by winding a single cord in a single layer of helicoidal adjacent turns lying in planes oriented according to the range of angular values from O˚ to 10˚ as previously defined.

For said reinforcement there are conveniently utilizable the usual metallic cords and preferybly, the so called 'high elongation (HE) cords', which are characterized by an ultimate elongation between 3% and 8%.

There can also be utilized textile cords, particularly those aromatic polyamide cords known and sold under the name of KEVLAR (Registered trade mark of DUPONT CO.). Finally, it has not to be excluded that there are other materials that are resistant at least to tensions that can be utilized such as, for example fibreglass.

Depending upon the material used for these cords 4, there can also be chosen the suitable density of the cords 4 in the layer, for exemple with the high elongation (HE) metallic cords mentioned above, the density would appropriately be comprised between 80 and 100 cords per dm.

Regarding the manner of realizing the breaker structure just described, the invention refers back to the many methods already well known to the technicians, so much so that said structure can be prepared,for example by winding over an appropriate drum or directly on the shaped carcass, the cords rubberized by an extruder with the elastomeric material of the layer 1, with disposing the turns successively side-by-side, till the desired breaker width has been obtained. Said width, as in the tyres of the state of the art, must substantially be equal to the width of the tread band 2 placed in the carcass crown.

Moreover, nothing excludes that the above said breaker structure cannot also be prepared by an injection system with methods that are known.

Returning to the matter of the elastomeric material of layer 1, it must have a dynamic shear modulus, measured under a cyclic deformation of 4% at a frequency of 50Hz, after a conditioning of at least 100 cycles and at a temperature of 60˚C, of not lesser than 25 Megapascals, and with an index of hysteresis loss (tan δ), measured under the same conditions, of not over O,10.

The significance of these parameters will become clear from the following description which illustrates the method of measuring said parameters; said method constituting, at the same time, the method adopted for examining the elastomeric material and for selecting those materials that present the characteristics determined in the ambit of the present invention.

Thus, a sheet 5 of elastomeric material (see FIG. 3) is prepared for being examined, with taking care to see that the dimension in the direction of the applied deformation, is ten times greater than the thickness 's' of the sheet 5 itself. The said sheet 5 is fixed between two slabs 6 and 7, that are usually metallic. To one of the two slabs, there is now applied a shifting 'd' (in the direction parallel to the plane of the sheet 5) that is sinusoidally variable with a frequency 50Hz, i.e. having a variable modulus in a sinusoidal way and in a constant direction, alternatively in both senses, so that the specimen sheet 5 assumes the form indicated with the continuous line in FIG. 3 and reacts with the force F (expressed in Newtons) directed in the opposite sense to the shifting itself.

In said FIGURE, the broken line indicates the non deformed specimen sheet 5. The ratio between the shifting 'd' and the thickness 's' of the sheet 5, represents the deformation 'g' under shearing stress.

By the shear modulus G (expressed in Megapascals) is meant the value:

$$G = \frac{F}{gA}$$

where A represents the surface of the specimen (expressed in mm$^2$) in contact with the slab.

The maximum shifting 'd' is applied so that g = 4%. The testing is carried out after having brought the sheet 5 and the zones contacting it, to the determined temperature, and the results are moreover noted after a period of time, that is short enough for not causing sensible temperature variations in said sheet 5.

It must now be noted that the course of the force F, although dependent upon the deformation of the sheet 5, and hence, sinusiodal as well, does not coincide with the course of said deformation g. In other words, the maximum value of the force F is not verified in coincidence with the application of the maximum value of the deformation g, but it results as being offset at an angle δ.

The value of the tangent of the angle δ provides the index of the loss by hysteresis.

It has already been stated that the dynamic shear modulus, measured under the previously cited conditions, must not result as being lesser than 25 Megapascals. Preferably, it must not be greater than 35 Megapascals either. Thus, even the value of tan δ must result as being lesser than O,10,and preferably, lesser than O.O6.

According to the invention, the elastomeric material of layer 1 must not present any decline in its above indicated characteristics, under the action of heat and/or owing to fatigue stresses. It is only in this manner, that the quality of the finished product will be guaranteed through the passage of time.

For the purpose of verifying whether or not the material under examination is able to ensure a constancy of the above said values, even in the just mentioned situations, the testing of the dynamic shear modulus is effected under diverse conditions.

As far as concerns the resistance to the action of heat, still using the above illustrated test sample, the values of the dynamic shear modulus at testing temperatures are determined, respectively at 20°C and at 60°C.The values of the modulus at these two temperatures, shall not differ by more than over 20% of the value of the modulus at 60°C.

Instead, concerning the resistance to fatigue, the previously described test is carried out with a deformation of 4% imposed with maintaining constant the temperature of the test sample at 60°C, for a number of deformation cycles that are not lesser than 500,000 cycles. Again, the dynamic shear modulus, determined at the start and at the termination of the test, cannot differ one from the other, by more than 20% of the starting value.

It was possible to verify that, for realizing said layer 1, there can appropriately be used both, elastomeric thermoplastic materials, as well as polyurethane thermoplastic materials, sequenced copolymers of the type such as polyetherester, polyesteramide and polyetheramide and also thermosetting elastomeric materials, such as the elastomeric based compounds, and even thermosetting polyurethanes, provided that they are formulated in such a way as to have the above specified dynamic properties.

Solely by way of example, there has been provided in the TABLE 1 given herebelow, an example of the compositions for each of the two types of elastomeric materials, indicated respectively with A and B, which have shown to completely satisfy the requirements of the invention, and compared with a composition C that is known in the state of the art as a high modulus compound and which results as being inadequate for the purposes of the present invention due to the fact that the modulus at 60°C diminishes for more than 20%, after 500,000 cycles of deformation.

### T A B L E   I

| Constituents | A Parts | B by | C weight |
|---|---|---|---|
| * Polyester OH terminated – Vulkollan 2000 M type | 100 | - | - |
| Polytetramethylenadipat having a molecular weight of 2000 | - | 100 | - |
| Natural Rubber | - | - | 80 |
| Polybutadiene | - | - | 20 |
| * Isocyanate – Desmodur 15 type | 30 | - | - |
| Dimethylphenylmethane 4,4' di-isocyanate | - | 30.3 | - |
| 2,2' Di-thio-aniline | - | 13,1 | - |
| Zinc Oxide | - | - | 10 |
| Sulphur | - | - | 7 |
| Accelerator | - | - | 1 |
| *Cross-linking agent – Vernetzer B type | 7 | - | - |
| Cobalt Salt | - | - | 5,7 |
| Phenolic Resin | - | - | 20.0 |
| Aromatic Oil | - | - | 7,5 |
| Carbon Black N 375 | - | - | 75.0 |

*)   Products marketed by the firm Bayer A.G.

### Physical Characteristics

| | A | B | C |
|---|---|---|---|
| Dynamic Shear Modulus at 20°C (Megapascals) | 28 | 31 | 32 |
| Index of Loss by Hysteresis | 0.06 | 0.05 | 0.09 |
| Dynamic Shear Modulus at 60°C | 25 | 27 | 28 |
| Dynamic Shear Modulus at 60°C after 500,000 cycles | 23 | 22 | 14 |

As far as concerns the commonly utilized compounds for the rubberizing of the breaker fabrics, these have a modulus of a value comprised between 3Mpa and 10Mpa, and they are totally inadequate for the purpose of the present invention.

The tyres according to the invention have proved to be able to appropriately and efficaciously solve the problem that was described at the beginning of the present descriptive part.

In fact, with regard to the shear modulus for the material of the layer 1, it has resulted absolutely capable of blocking any relative sliding in the circumferential direction, between two adjacent cords. It is precisely this type of sliding, by allowing to develop a shear strain in the already known breaker structure in the plane of the ground-contact area during cornering, that caused a loss of steering control and a loss of lateral stability in the tyre, for which a remedy was taken by using superimposed layers of inclined cords, crossed with the cords of the adjacent layers; thus realizing a structure substantially indeformable under shear buckling strains.

In the tyre of the invention, since said type of deformation is completely impeded by the rigidity of the elastomeric material used for the layer 1 (and which remains substantially unaltered for the entire service life of the tyre), the only further requirement for the breaker structure is a winding of longitudinal cords for guaranteeing the inextensibility of the structure in the circumferential direction. In fact, the tyre of the invention shows a road behaviour that is not lesser than that found in respective known tyres.

For what concerns the absorption of horse power, it is quite clear that, in the structure of the invention, what is lacking are the shear strains that are caused by the buckling under loads, in the structure having several strips, and which strains are responsible to a good extent, for the dissipation of horse power in breakers.

Moreover, the characteristics of flexibility and of low hysteretical losses in the material of the layer, contribute to having a sensible reduction in the horse power absorbed during the running of the tyre, with respect to the other known breaker structures.

To end with, the rigidity of the elastomeric material of the layer, also provides a notable resistance to compression, so much so that there can be adopted for the longitudinal reinforcing cords also materials that are exclusively resistant to tensions, such as textile fibres and fibre glass, with having the further benefit relative to weight and the flexibility of the structure and hence, of the horse power absorbed, and furthermore non negligible economic advantages are obtained by using materials that are not costly.

## Claims

1. Tyre for vehicle wheels, comprising a radial carcass (3), a tread band (2) disposed in the crown of said carcass and an annular reinforcing structure (breaker) that is circumferentially inextensible, interposed between said carcass (3) and said tread band (2) and having substantially the same width as said band (2), said annular reinforcing structure comprising a single layer (1) of high modulus elastomeric material, reinforced with a strip of cords (4) of a tension resistent material, disposed parallel to each other and oriented according to an angle comprised between $0°$ and $10°$ with respect to the circumferential direction of the tyre, said elastomeric material having a dynamic modulus for shearing stresses under cyclic deformation of 4 % at a frequency of 50 Hz, after a conditioning of at least 100 cycles and at a temperature of $60°$C, comprised within 25 and 35 Megapascals and an index of loss by hysteresis tan $\delta$ measured under the same conditions of said modulus, of not over 0,10,
**characterized** by the fact that said elastomeric material is selected to comprise the further characteristic of variation of the value of its dynamic modulus, after a period of endurance of 500,000 cycles under a deformation of 4 % at a temperature of $60°$C, comprised within 20 % of the initial value, measured under the same conditions.

2. Tyre, according to claim 1, characterized by the fact that said elastomeric material has the variation of the values of its modulus, when the testing temperature varies from $60°$C to $20°$C, comprised within 20% of the value measured at $60°$C.

3. Tyre, according to claim 1, characterized by the fact that the value of said index of loss by hysteresis, is not greater than 0,06.

4. Tyre, according to claim 1, characterized by the fact that said high modulus elastomeric material is a thermoplastic elastomeric material chosen from the group comprising:
   - thermoplastic polyurethane
   - sequenced copolymers of polyetheresters, polyetheramides, polyetheresteramides.

5. Tyre, according to claim 1, characterized by the fact that said high modulus elastomeric material is a thermosetting elastomeric material chosen from the group comprising:
   - elastomeric based compounds
   - thermosetting polyurethanes.

6. Tyre, according to claim 1, characterized by the fact that the material used for said cords (4), is steel.

7. Tyre, according to claim 6, characterized by the fact that said cords (4) are of the (HE) high enlongation type, presenting an ultimate elongation comprised between 3% and 8%.

8. Tyre, according to claim 7, characterized by the fact that the densitiy of said HE cords, is comprised of between 80 to 100 cords per dm.

9. Tyre, according to claim 1, characterized by the fact that the material of said cords (4) is an aromatic polyamid.

10. Tyre, according to claim 1, characterized by the fact that the material of said cords (4) is fibre glass.

**Revendications**

1. Pneumatique pour roues de véhicules, comprenant une carcasse radiale (3), une bande de roulement (2) disposée dans la couronne de ladite carcasse et une structure annulaire de renforcement (nappe-sommet), qui est inextensible circonférentiellement, est intercalée entre ladite carcasse (3) et ladite bande de roulement (2) et possède sensiblement la même largeur que ladite bande (2), ladite structure annulaire de renforcement comprenant une seule couche (1) formée d'un matériau élastomère possédant un module élevé, renforcé par une nappe de câblés (4) réalisée en un matériau résistant à la traction, disposés parallèlement les uns aux autres et orientés suivant un angle compris entre 0° et 10° par rapport à la direction circonférentielle du pneumatique, ledit matériau élastomère possédant un module dynamique pour des contraintes de cisaillement sous déformation cyclique de 4 % à une fréquence de 50 Hz, après un conditionnement d'au moins 100 cycles et à une température de 60°C, compris entre 25 et 35 mégapascals, et un indice de perte par hystérésis tan δ, mesuré dans les mêmes conditions dudit module, non supérieur à 0,10,
caractérisé en ce que ledit matériau élastomère est choisi de manière à posséder la caractéristique supplémentaire consistant en ce que la valeur de son module dynamique, après une période d'endurance de 500 000 cycles sous une déformation de 4 % à une température de 60°C, varie de moins de 20 % par rapport à la valeur initiale, la mesure étant effectuée dans les mêmes conditions.

2. Pneumatique selon la revendication 1, caractérisé en ce que la variation des valeurs du module du matériau élastomère, lorsque la température d'essai varie de 60°C à 20°C, est inférieure à 20 % de la valeur mesurée à 60°C.

3. Pneumatique selon la revendication 1, caractérisé en ce que la valeur dudit indice de perte par hystérésis n'est par supérieure à 0,06.

4. Pneumatique selon la revendication 1, caractérisé en ce que ledit matériau élastomère possédant un module d'élasticité élevé est un matériau élastomère thermoplastique choisi dans le groupe incluant :
   - le polyuréthane thermoplastique,
   - des copolymères séquencés d'esters de polyéther, de polyétheramides, d'esteramides de polyéther.

5. Pneumatique selon la revendication 1, caractérisé en ce que ledit matériau élastomère à module élevé est une matière élastomère thermodurcissable choisie dans le groupe comprenant :
   des composés à base d'élastomères,
   des polyuréthanes thermodurcissables.

6. Pneumatique selon la revendication 1, caractérisé en ce que le matériau utilisé pour lesdits câblés (4) est l'acier.

7. Pneumatique selon la revendication 6, caractérisé en ce que lesdits câblés (7) sont des câblés du type à coefficient d'allongement élevé (HE), qui possèdent une limite d'allongement comprise entre 3 % et 8 %.

8. Pneumatique selon la revendication 7, caractérisé en ce que la densité desdits câblés (HE) est comprise entre 80 et 100 câblés par dm.

9. Pneumatique selon la revendication 1, caractérisé en ce que le matériau desdits câblés (4) est un polyamide aromatique.

10. Pneumatique selon la revendication 1, caractérisé en ce que le matériau desdits câblés (4) est formé de fibres de verre.

**Patentansprüche**

1. Reifen für Fahrzeugräder, umfassend eine radiale Karkasse (3), einen Laufstreifen (2), der in der Krone der Karkasse angeordnet ist, und ein ringförmiges Verstärkungsgebilde (Gürtel), welches in Umfangsrichtung undehnbar ist, zwischen der Karkasse (3) und dem Laufstreifen (2) angeordnet ist und im wesentlichen die gleiche Breite wie der Laufstreifen (2) hat, wobei das ringförmige Verstärkungsgebilde eine einzige Lage (1) aus elastomerem Material mit hohem Modul aufweist, die mit einem Schnurstreifen verstärkt ist, dessen Schnüre (4) aus einem gegen Zugbeanspruchungen widerstandsfähigen Material bestehen und parallel zueinander angeordnet und mit Bezug auf die Umfangsrichtung des Reifens in einem Winkel zwischen 0° und 10° orientiert sind, wobei das elastomere Material einen dynamischen Modul für Scherbeanspruchungen unter zyklischer Verformung von 4 % bei einer Frequenz von 50 Hz, nach einem Konditionieren von wenigstens 100 Zyklen bei einer Temperatur von 60°C, hat, der zwischen 25 und 35 Megapascal liegt, und einen Index des Hystereseverlustes tan $\delta$, gemessen unter den gleichen Bedingungen des Moduls, von nicht höher als 0,10 hat,
**dadurch gekennzeichnet**, daß das elastomere Material derart ausgewählt ist, daß es hinsichtlich der Änderung seines dynamischen Moduls die weitere Charakteristik hat, daß sein dynamischer Modul nach einer Lastwechselperiode von 500.000 Zyklen unter einer Verformung von 4 % bei einer Temperatur von 60°C, innerhalb von 20 % des anfänglichen Wertes liegt, gemessen unter den gleichen Bedingungen.

2. Reifen nach Anspruch 1, dadurch gekennzeichnet, daß die Änderung der Werte des Moduls des elastomeren Materials, wenn die Testtemperatur sich von 60°C auf 20°C ändert, innerhalb von 20 % des bei 60°C gemessenen Wertes liegt.

3. Reifen nach Anspruch 1, dadurch gekennzeichnet, daß der Wert des Index des Hystereseverlustes nicht größer als 0,06 ist.

4. Reifen nach Anspruch 1, dadurch gekennzeichnet, daß das elastomere Material mit hohem Modul ein thermoplastisches elastomeres Material ist, welches aus der Gruppe ausgewählt ist, die umfaßt:
   - thermoplastisches Polyurethan
   - in Sequenzen geordnete Copolymere von Polyetherestern, Polyetheramiden, Polyetheresteramiden.

5. Reifen nach Anspruch 1, dadurch gekennzeichnet, daß das elastomere Material mit hohem Modul ein wärmehärtendes elastomeres Material ist, welches aus der Gruppe ausgewählt ist, die umfaßt:
   - Massen auf der Basis von Elastomeren
   - wärmehärtende Polyurethane.

6. Reifen nach Anspruch 1, dadurch gekennzeichnet, daß das für die Schnüre (4) verwendete Material Stahl ist.

7. Reifen nach Anspruch 6, dadurch gekennzeichnet, daß die Schnüre (4) Schnüre hoher Dehnung (HE) sind, die eine Grenzdehnung zwischen 3 % und 8 % haben.

8. Reifen nach Anspruch 7, dadurch gekennzeichnet, daß die Dichte der HE-Schnüre zwischen 80 bis 100 Schnüre je dm beträgt.

9. Reifen nach Anspruch 1, dadurch gekennzeichnet, daß das Material der Schnüre (4) ein aromatisches Polyamid ist.

10. Reifen nach Anspruch 1, dadurch gekennzeichnet, daß das Material der Schnüre (4) Faserglas ist.

FIG. 2

FIG.1

FIG.3